# EUROPÄISCHE PATENTANMELDUNG

(11) **EP 4 190 429 A1**
(43) Veröffentlichungstag der Anmeldung: **07.06.2023**
(21) Anmeldenummer: 22208884.1
(22) Anmeldetag: 22.11.2022
(51) Int. Cl.: B01D 53/32, F24C 15/20

(54) **FILTEREINHEIT FÜR DUNSTABZUGSVORRICHTUNG UND DUNSTABZUGSVORRICHTUNG**

(30) Priorität: 02.12.2021 DE 102021213671
(71) Anmelder: BSH Hausgeräte GmbH, 81739 München (DE)
(72) Erfinder: Hepperle, Georg, 74081 Heilbronn (DE); John, Barbara, 76646 Bruchsal (DE); Vollmar, Daniel, 76327 Pfinztal (DE)

(57) **Zusammenfassung**

Die vorliegende Erfindung betrifft eine Filtereinheit für eine Dunstabzugsvorrichtung, wobei die Filtereinheit (16) mindestens eine Plasmaelektrode (2) umfasst. Die Filtereinheit ist dadurch gekennzeichnet, dass die Filtereinheit (16) zumindest ein Trägerelement (1) aufweist, auf dem die Plasmaelektrode (2) gehalten wird, und dass das Trägerelement (1) und die Plasmaelektrode (2) luftdurchlässig sind. Zudem betrifft die Erfindung eine Dunstabzugsvorrichtung mit mindestens einer solchen Filtereinheit (16).

## Beschreibung

Die vorliegende Erfindung betrifft eine Filtereinheit für eine Dunstabzugsvorrichtung und eine Dunstabzugsvorrichtung mit einer solchen Filtereinheit.

Bei Dunstabzugsvorrichtungen, wie beispielsweise Dunstabzugshauben, die über einem Kochfeld montiert werden, oder Muldenlüftern, die in oder neben dem Kochfeld montiert werden, die in Küchen verwendet werden, ist es bekannt diese als Abluft-Dunstabzugsvorrichtung oder Umluft-Dunstabzugsvorrichtung zu betreiben oder diese als Umluft-Dunstabzugsvorrichtung auszugestalten. Insbesondere bei Dunstabzugsvorrichtungen, die als Umluft-Dunstabzugsvorrichtung ausgestaltet sind oder als Umluft-Dunstabzugsvorrichtung betrieben werden können, müssen Kochgerüche und insbesondere flüchtige organische Verbindungen (Volatile Organic Compounds (VOC)) aus den Kochwrasen ausgefiltert werden. Dabei ist eine hocheffiziente Luftfiltereinrichtung unerlässlich, da die angesaugte Wrasenluft bei Umluftbetrieb oder Umluftausgestaltung der Dunstabzugsvorrichtung im geschlossenen Raum zirkuliert und nicht ins Freie, das heißt in die Außenluft, ausgeblasen wird.

Für die Geruchsfiltration von Kochdünsten und sonstigen organischen, flüchtigen Verbindungen VOC's werden in der Praxis für den Umluftfall hauptsächlich Aktivkohlefilter oder Zeolithfilter (in der Praxis für Dunstabzüge auch als Umluftfilter bezeichnet) eingesetzt. Diese werden üblicherweise direkt hinter dem Fettfilter, das heißt in Strömungsrichtung noch vor dem Lüfter, verbaut oder im Ausblasbereich des Dunstabzuges in Strömungsrichtung hinter dem Lüfter eingesetzt. Ein Nachteil dieser Filtermedien ist die begrenzte Standzeit, da sich diese Medien über der Betriebszeit des Dunstabzuges zusetzen, was wiederum die Filtereffizienz negativ beeinflusst. Folglich müssen diese Filtermedien aufgrund der begrenzten Standzeit in definierten Intervallen ausgetauscht oder mittels Wärmeeinwirkung regeneriert werden.

Neben diesen genannten Adsorbientien finden in der Praxisanwendung weiterhin Plasmafilter Einsatz, die als autarke Systeme zur Geruchsneutralisation eingesetzt werden. Diese Systeme, meist als Zukaufteile gedacht, werden auf den Ausblasstutzen (in Strömungsrichtung nach dem Lüfter) des Dunstabzuges als Aufsatz verbaut. Das Kernstück dieser Plasmafilter bildet die Plasmaelektrode, die das eigentliche Plasma generiert. Dieses Plasma wird an der Oberfläche der Plasmaelektrode erzeugt und wird daher auch als Oberflächenplasma bezeichnet. Die Luft strömt dabei parallel zu der Erstreckung der Plasmaelektrode. Diese Plasmaelektroden haben den großen Nachteil, dass die an der Plasmaelektrode entlangströmende Luft nicht vollständig mit dem generierten Plasma in Kontakt kommt und die Kochgerüche, insbesondere VOC's, nur eingeschränkt abgebaut beziehungsweise neutralisiert werden. Dies führt zu einer verminderten Filtereffizienz.

Der vorliegenden Erfindung liegt daher die Aufgabe zugrunde eine Lösung zu schaffen, die die Nachteile des Standes der Technik zumindest teilweise behebt.

Gemäß einem ersten Aspekt wird die Aufgabe daher gelöst durch eine Filtereinheit nach Anspruch 1. Gemäß einem weiteren Aspekt wird die Aufgabe durch eine Dunstabzugsvorrichtung nach Anspruch 12 gelöst. Bevorzugte Ausführungsformen sind in den abhängigen Ansprüchen angegeben.

Die Erfindung betrifft daher eine Filtereinheit für eine Dunstabzugsvorrichtung, wobei die Filtereinheit mindestens eine Plasmaelektrode umfasst. Die Filtereinheit ist dadurch gekennzeichnet, dass die Filtereinheit ein Trägerelement aufweist, auf dem die Plasmaelektrode gehalten wird, und dass das Trägerelement und die Plasmaelektrode luftdurchlässig sind.

Die Dunstabzugsvorrichtung für die die Filtereinheit verwendet wird, kann eine Dunstabzugshaube oder ein Muldenlüfter sein. Als Dunstabzugshaube wird hierbei eine Dunstabzugsvorrichtung bezeichnet, die oberhalb von einem Kochfeld oder einer Arbeitsplatte angeordnet ist und die Luft nach oben einsaugt. Als Muldenlüfter wird eine Dunstabzugsvorrichtung bezeichnet, die in oder neben einem Kochfeld angeordnet ist und die Luft nach unten einsaugt. Die Dunstabzugsvorrichtung wird vorzugsweise in einer Küche betrieben.

Als Filtereinheit wird erfindungsgemäß eine Einheit bezeichnet, durch die Geruchsstoffe, insbesondere flüchtige organische Verbindungen (VOC's) aus der angesaugten Luft ausgefiltert werden können. Die Filtereinheit umfasst mindestens eine Plasmaelektrode. Die Filtereinheit kann auch als Filterkassette oder Filtermodul bezeichnet werden. Insbesondere kann die Filtereinheit vorteilhaft bei Dunstabzugsvorrichtungen eingesetzt werden, die im Umluftbetrieb betrieben werden oder betrieben werden können. Die Plasmaelektrode kann mit einer Spannungsquelle verbunden werden, um das zur Reinigung der Luft erforderliche Plasma zu erzeugen. Die Plasmaelektrode stellt vorzugsweise eine flächige Plasmaelektrode dar. Die Plasmaelektrode dient vorzugsweise dazu ein nichtthermisches Plasma mittels dielektrischer Barriereentladung (DBE (dielectric barrier discharge, DBD)) zu erzeugen. Die Spannungsquelle kann Teil der Filtereinheit sein oder in der Dunstabzugsvorrichtung integriert sein und mit der Plasmaelektrode verbunden werden. Zudem kann die Filtereinheit Befestigungsmittel zur Befestigung in der Dunstabzugsvorrichtung aufweisen.

Die Plasmaelektrode kann beispielsweise ein Substrat, eine Hochspannungselektrode und mindestens eine Gegenelektrode aufweisen, die auf oder an dem Substrat vorgesehen sind. Das Substrat dient dabei als Dielektrikum, wenn an die Hochspannungselektrode und gegebenenfalls die mindestens eine Gegenelektrode Hochspannung angelegt wird. Die Hochspannungselektrode und die mindestens eine Gegenelektrode bestehen vorzugsweise aus korrosionsbeständigen Werkstoffen, vorzugsweise Silber, Wolfram-, Nickel-Legierungen oder Hartgold. Die Hochspannungselektrode und die mindestens eine Gegenelektrode weisen vorzugsweise eine flächige Form auf und können beispielsweise als Gitter ausgestaltet sein. Die elektrische Kontaktierung eines Hochspannungserzeugers mit der Plasmaelektrode erfolgt vorzugsweise über eine Kontaktstelle der Gegenelektrode und einer Kontaktstelle der Hochspannungselektrode.

Gemäß einer Ausführungsform ist die Breite c der Stege der Gegenelektrode, durch die die luftdurchlässige Struktur der Gegenelektrode gebildet ist, kleiner oder gleich der Breite d der vorzugsweise in dem Substrat darunterliegenden Stege der Hochspannungselektrode, durch die die luftdurchlässige Struktur der Hochspannungselektrode gebildet ist (c ≤ d). Der Abstand a, der senkrecht zu der Flächenerstreckung der Elektroden zwischen der vorzugsweise in einem Substrat eingebetteten Gegenelektrode und der Stirnfläche des Substrates der Plasmaelektrode vorliegt, beträgt vorzugsweise ≤ 1mm. Besonders bevorzugt beträgt der Abstand 0,1 mm ≤ a ≤ 0,5mm. Der Abstand b, der senkrecht zu der Flächenerstreckung der Elektroden zwischen der Gegenelektrode und der Hochspannungselektrode vorliegt, beträgt vorzugsweise ≤ 1,5mm. Besonders bevorzugt beträgt der Abstand 0,2 ≤ b ≤ 1mm.

Erfindungsgemäß weist die Filtereinheit ein Trägerelement auf, auf dem die Plasmaelektrode gehalten wird. Das Trägerelement stellt vorzugsweise einen flächigen Träger dar, der in Form und Größe der Form und der Größe der Plasmaelektrode angepasst ist. Das Trägerelement dient dazu die Plasmaelektrode über deren Fläche zu stützen. Vorzugsweise ist die Plasmaelektrode mit dem Trägerelement verbunden.

Erfindungsgemäß sind das Trägerelement und die Plasmaelektrode luftdurchlässig. Insbesondere weisen das Trägerelement und die Plasmaelektrode jeweils mindestens eine Durchlassöffnung auf, die sich vorzugsweise jeweils zwischen den Stirnflächen des Trägerelementes und der Plasmaelektrode erstrecken und diese miteinander verbindet. Die Durchlassöffnung kann auch als Loch oder Bohrung bezeichnet werden. Als Stirnfläche des Trägerelementes und der Plasmaelektrode wird dabei eine Oberfläche bezeichnet, die die Anströmseite des Trägerelementes beziehungsweise der Plasmaelektrode oder die Abströmseite des Trägerelementes beziehungsweise der Plasmaelektrode in dem in der Dunstabzugsvorrichtung eingesetzten Zustand darstellt. Die Plasmaelektrode kann auch als perforierte Plasmaelektrode bezeichnet werden und das Trägerelement als perforiertes Trägerelement. Hinsichtlich der Perforation der Plasmaelektrode und des Trägerelementes ist vorzugsweise eine hexagonale Wabenlochung zu wählen. Alternativ sind auch Rundlochungen, Quadratlochungen sowie Lang- und Schlitzlochungen möglich.

Mit der Plasmaelektrode kann eine dielektrisch behinderte Barriereentladung, die auch als dielektrische Barriereentladung (DBE) bezeichnet wird, erzielt werden. Mit der erfindungsgemäßen Plasmaelektrode kann somit ein nichtthermisches Plasma mittels DBE erzeugt werden. Durch den DBE-Effekt werden olfaktorisch unangenehme Gerüche in der Luft abgebaut beziehungsweise beseitigt, insbesondere wird eine Geruchsbeseitigung von organisch flüchtigen Verbindungen VOCs erzielt. Bei einer Plasmaelektrode mit Durchlassöffnungen, umschließen die beiden vorzugsweise mittig übereinanderliegenden Elektroden (Hochspannungselektrode und Gegenelektrode) vorzugsweise vollständig die jeweils mindestens eine Durchlassöffnung in dem Substrat der Plasmaelektrode über den gesamten Umfang. Alternativ muss jedoch die einzelne Durchlassöffnung nicht zwingend von den Durchlässen der beiden Elektroden jeweils vollständig umschlossen sein. In diesem Fall kann die Elektrodenanordnung um die einzelne Durchlassöffnung beispielsweise mindestens einmal eine Unterbrechung aufweisen.

Indem die Filtereinheit zumindest ein Trägerelement aufweist und das Trägerelement und die Plasmaelektrode luftdurchlässig sind, kann eine Reihe von Vorteilen erzielt werden.

Durch das Vorsehen eines Trägerelementes können statische und dynamische Belastungen wie Sprödbruch oder Schwingungsbruch der Plasmaelektrode verhindert werden.

Indem das Trägerelement und die Plasmaelektrode luftdurchlässig ausgestaltet sind, kann die Luft, die die Filtereinheit durchströmt, gezielt zu dem Plasma geleitet werden und der Kontakt der Luft mit dem Plasma dadurch maximiert werden.

Das Substrat der Plasmaelektrode besteht vorzugsweise aus einem elektrisch isolierenden und elektrochemisch korrosionsbeständigen Werkstoff. Das Substrat fungiert zudem als Dielektrikum. Als Dielektrikum wird eine elektrisch schwach- oder nichtleitendes Material bezeichnet: Insbesondere sind in dem Dielektrikum die vorhandenen Ladungsträger nicht frei beweglich. Das Dielektrikum stellt vorzugsweise einen Feststoff dar.

Gemäß einer Ausführungsform umfasst die Plasmaelektrode ein Keramiksubstrat. Dies bedeutet, dass das Substrat der Plasmaelektrode aus keramischem Material besteht. Als keramisches Material wird ein Werkstoff bezeichnet, der einen anorganischen nichtmetallischen Werkstoff darstellt. Als keramisches Material wird vorzugsweise ein oxydisches Material bezeichnet. Insbesondere kann Aluminiumoxid (Al₂O₃) als keramisches Material für das Substrat verwendet werden.

Das Substrat weist vorzugsweise eine luftdurchlässige Struktur auf. Das Substrat weist dabei eine flächige Form auf. Insbesondere kann das Substrat die Form einer Platte aufweisen. Vorzugsweise weist das Substrat zumindest eine Durchlassöffnung auf. Die Durchlassöffnung kann auch als Loch oder Bohrung bezeichnet werden. Insbesondere wird als Durchlassöffnung eine Öffnung bezeichnet, die sich zwischen den Stirnflächen des Substrates erstreckt und diese miteinander verbindet. Als Stirnfläche des Substrates wird dabei eine Oberfläche bezeichnet, die die Anströmseite des Substrates oder die Abströmseite des Substrates darstellt.

In der Plasmaelektrode kann zumindest die Hochspannungselektrode in dem Substrat der Plasmaelektrode eingebettet sein. Als eingebettet wird hierbei eine Position bezeichnet, in der die Hochspannungselektrode in der Schnittansicht senkrecht zu der Erstreckung der Hochspannungselektrode von allen Seiten von dem Material des Substrates umgeben ist. Durch Vorsehen mindestens einer Gegenelektrode und Anlegen einer entsprechenden Spannung wird an mindestens einer Oberfläche der Plasmaelektrode ein Plasma erzeugt. Die Plasmaelektrode kann daher auch als Oberflächenplasmaelektrode bezeichnet werden.

Das keramische Substrat zusammen mit der Hochspannungselektrode und der oder den Gegenelektroden wird auch als Werkstoffverbund bezeichnet.

Indem die Plasmaelektrode vorzugsweise ein keramisches Substrat umfasst, kann ein höchstmöglicher Schutz gewährleistet werden. Insbesondere kann ein Schutz hinsichtlich elektrischer Isolation und gegen elektrochemische Korrosion, die durch das Plasma hervorgerufen werden kann, gewährleistet werden. Dadurch kann die Standzeit der Plasmaelektrode verlängert werden. Zudem ist keramisches Material temperaturbeständig und chemisch resistent gegen haushaltsübliche Säuren und Laugen. Folglich kann die Plasmaelektrode mit einem Keramiksubstrat nach Bedarf im Geschirrspüler gereinigt werden.

Weiterhin ist eine Plasmaelektrode mit einem Keramiksubstrat bei der erfindungsgemäßen Filtereinheit einsetzbar, da ein Keramiksubstrat zwar brüchig ist, durch das erfindungsgemäß vorgesehene Trägerelement aber ein Bruch des Substrates und damit der Plasmaelektrode verhindert werden kann.

Gemäß einer Ausführungsform ist die Plasmaelektrode mit dem Trägerelement form- und/oder stoffschlüssig verbunden. Als Verbindung zwischen Plasmaelektrode und Trägerelement kann beispielsweise eine Klebverbindung mittels eines Klebstoffes verwendet werden. Durch eine solche stoffschlüssigen Verbindung der perforierten Plasmaelektrode auf dem perforierten Trägerelement kann gewährleistet werden, dass die Plasmaelektrode, die ein sprödes, bruchanfälliges, keramisches Substrat umfassen kann vor statischer und dynamischer Belastung, insbesondere Sprödbruch und/der Schwingungsbruch geschützt ist.

Alternativ oder zusätzlich ist es aber auch möglich die Plasmaelektrode mit dem Trägerelement durch eine Rastverbindung zu verbinden.

Gemäß einer Ausführungsform weist die Plasmaelektrode eine Gitterform auf.

Die Durchlassöffnungen der Plasmaelektrode können dabei eine quadratische, rechteckige, polygonale oder eine runde Form aufweisen. Bei der Ausführungsform, bei der die Plasmaelektrode ein Gitter darstellt, stellen vorzugsweise insbesondere das Substrat und die Hochspannungselektrode sowie die Gegenelektrode(n) jeweils ein Gitter dar. Die Durchlassöffnungen der Hochspannungselektrode und Gegenelektrode(n) können zur besseren Unterscheidung als Durchlässe bezeichnet werden. Die Form der Durchlässe des Gitters der Hochspannungselektrode und der Gegenelektrode(n) entspricht in diesem Fall der Form der Durchlassöffnungen der gitterförmigen Struktur des Substrates.

Gemäß einer Ausführungsform weist das Trägerelement eine Gitterform auf. Die Durchlassöffnungen des Trägerelementes werden zur besseren Unterscheidung als Öffnungen bezeichnet. Die Öffnungen des Trägerelementes können dabei eine quadratische, rechteckige, polygonale oder eine runde Form aufweisen. Vorzugsweise weist das Trägerelement eine Höhe auf, die größer als die Höhe der Plasmaelektrode. Als Höhe wird hierbei die Abmessung des Trägerelementes bezeichnet, die sich senkrecht zu der Fläche der Plasmaelektrode erstreckt. Durch diese große Höhe kann eine gezielte Luftführung in dem Trägerelement auf einfache Weise realisiert werden.

Gemäß einer bevorzugten Ausführungsform besteht das Trägerelement aus Kunststoff. Das Trägerelement kann auch als Kunststoff-Compound bezeichnet werden. In dieser Ausführungsform kann das Trägerelement auch als Kunststoffträger bezeichnet werden.

Durch dieses Material kann zum einen die Aufnahme von Schwingungen und Formänderungen von dem Trägerelement gewährleistet werden. Zum anderen kann mit Kunststoff auf einfache Weise die Struktur des Trägerelementes hergestellt werden.

Gemäß einer Ausführungsform besteht das Trägerelement aus einem elektrisch leitfähigen Kunststoff. Beispielsweise kann das Trägerelement aus einem antistatisch beschaffenen Kunststoff, der auch als Kunststoff-Compound bezeichnet werden kann, hergestellt sein. Vorzugsweise weist der Kunststoffträger einen Oberflächenwiderstand R ≤ 10¹¹ Ohm auf. Vorzugsweise werden elektrisch leitende Kunststoff-Compounds mit einem Oberflächenwiderstand R < 10⁶ Ohm verwendet. Dies garantiert, dass der Kunststoffträger keiner elektrostatischen Aufladung ausgesetzt ist und im Fehlerfall beim Durchbrennen der Hochspannungselektrode oder der Gegenelektrode(n) den elektrischen Fehlerstrom I_{F} über den perforierten Kunststoffträger elektrisch ableitet. Diese Maßnahme garantiert einen sicheren Betrieb auch im Fehlerfall beziehungsweise ein sicheres Abschalten der Filtereinheit.

Alternativ zu Kunststoff kann das Trägerelement beispielsweise aus einem perforierten metallischen Blech mit mindestens einem Loch aus Eisen- oder Nichteisenmetallen bestehen. Das perforierte metallische Blech kann auch als Lochblech bezeichnet werden.

Gemäß einer Ausführungsform weist die Filtereinheit ein Mischelement auf. Das Mischelement kann auch als Tubulator bezeichnet werden. Hierdurch kann eine bestmögliche homogene Durchmischung der durchströmenden Luft mit den im nicht thermischen Plasma erzeugten reaktiven Sauerstoffspezies (reactive oxygen species (ROS)) und reaktiven Stickstoffspezies (reactive nitrogen species (RNS)) gewährleistet werden. Das Mischelement stellt vorzugsweise eine Plattenform dar. Bei dem Mischelement handelt es sich vorzugsweise um ein poröses, luftdurchlässiges oder perforiertes Medium. Beispielsweise besteht das Mischelement aus mindestens einer Lage. Vorzugsweise werden Streckmetall-Lagen, Drahtgewebematten, Lochbleche und grobporige Sinterkunststoffe und/oder Schaumstoff eingesetzt.

Gemäß einer Ausführungsform ist das Mischelement der Plasmaelektrode in Strömungsrichtung nachgeschaltet. Hierdurch wird eine optimale Durchmischung der im nichtthermischen Plasma erzeugten reaktiven Sauerstoffspezies (ROS) und reaktiven Stickstoffspezies (RNS) mit der durchströmenden Luft und den darin befindlichen VOC's und sonstigen Kochgerüchen gewährleistet.

Gemäß einer Ausführungsform ist an zumindest einem Rand der Filtereinheit ein Schwingungsdämpfer aus elastischem Material vorgesehen. Der mindestens eine Schwingungsdämpfer kann an der Plasmaelektrode oder an dem Trägerelement vorgesehen sein. Durch den mindestens einen Schwingungsdämpfer kann eine Aufhängung und / oder Befestigung der Filtereinheit in der Dunstabzugsvorrichtung ermöglicht werden. Zudem kann durch den Schwingungsdämpfer, der vorzugsweise aus einem elastisch verformbaren Kunststoff, beispielsweise Elastomer, besteht, eine zusätzliche mechanische Kompensation der Plasmaelektrode gegen Sprödbruch und Schwingungsbruch gewährleisten werden, was insbesondere bei einer Plasmaelektrode die ein keramisches Substrat umfasst, von besonderer Bedeutung ist.

Gemäß einer Ausführungsform weist die Filtereinheit, bei der das Trägerelement aus einem elektrisch leitfähigem Kunststoff besteht, mindestens eine Kontaktierungsstelle für das Trägerelement auf. Über die Kontaktierungsstelle, die auch als Kontaktstelle bezeichnet werden kann, kann das Trägerelement mit einem elektrisch leitenden Teil, beispielsweise einem Gehäuse der Filtereinheit oder der Dunstabzugsvorrichtung, insbesondere mit dem hierzu vorgesehenen elektrischen Potential verbunden werden. Die Kontaktstelle kann beispielsweise als Vorsprung an dem Trägerelement oder als Einschneidverbindung, Steckverbindung, Loch im Träger zum Einschrauben und dergleichen ausgebildet sein. Ein Vorteil des Vorsehens einer Kontaktstelle besteht insbesondere darin, dass im Fehlerfall, beispielsweise beim Durchbrennen der Plasmaelektrode mit Entstehung eines Lichtbogens zwischen der Hochspannungselektrode und der oder den Gegenelektroden, der elektrische Kurzschlussstrom über das Trägerelement abgeleitet werden kann. Dies gibt eine höhere elektrische Sicherheit im Fehlerfall. Zudem können durch die Kontaktstelle des Trägerelementes unerwünschte elektrostatische Aufladungen unterbunden werden.

Gemäß einem weiteren Aspekt betrifft die vorliegende Erfindung eine Dunstabzugsvorrichtung, die mindestens eine erfindungsgemäße Filtereinheit aufweist.

Vorteile und Merkmale, die bezüglich der Filtereinheit beschrieben werden, gelten - soweit anwendbar - entsprechend für die Dunstabzugsvorrichtung und umgekehrt.

Gemäß einer bevorzugten Ausführungsform ist die mindestens eine Filtereinheit so integriert, dass die mindestens eine Plasmaelektrode senkrecht zu der Strömungsrichtung in der Dunstabzugsvorrichtung liegt. Als Strömungsrichtung wird die Richtung bezeichnet, in der die zu reinigende Luft die Dunstabzugsvorrichtung durchströmt. Als senkrecht zu der Strömungsrichtung angeordnet wird eine Ausrichtung der Plasmaelektrode bezeichnet, in der die Strömungsrichtung parallel zu der mindestens einen Durchlassöffnung der Plasmaelektrode liegt.

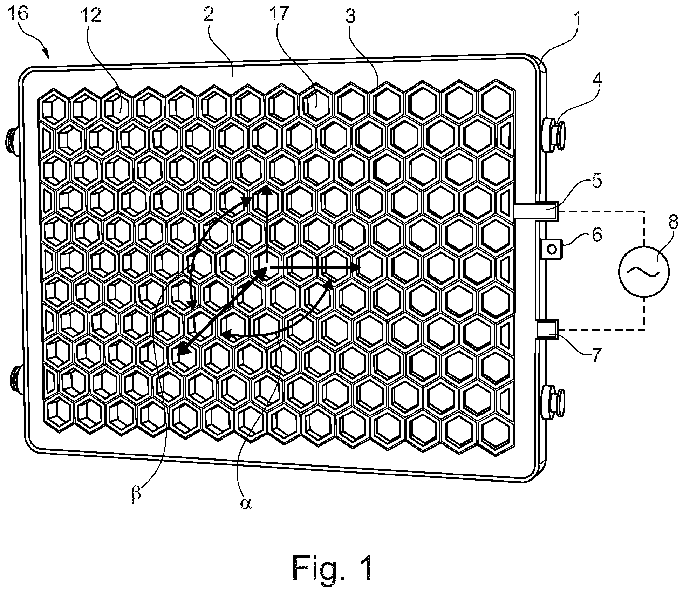

Allerdings kann die Durchströmung der mit VOC's beladenen Luft beziehungsweise Kochwrasen durch die Filtereinheit und insbesondere die Plasmaelektrode auch in anderen Richtungen erfolgen, die von der parallelen Anströmung abweichen. Insbesondere können die Winkel zwischen der Stirnfläche und der Hauptströmungsrichtung und der Winkel zwischen einer Linie in der Stirnfläche und der Projektion der Hauptströmungsrichtung auf die Stirnfläche im Bereich von 0 < α < 180° und 0 < β <180° liegen (s. Figur 1). Zudem kann gemäß einer Ausführungsform Anströmung der Filtereinheit und insbesondere der Plasmaelektrode in beiden Richtungen, das heißt von jeder der Stirnflächen erfolgen.

Gemäß einer Ausführungsform ist die Filtereinheit so angeordnet, dass in Strömungsrichtung zunächst das Trägerelement und anschließend die Plasmaelektrode und dann das Mischelement durchströmt werden.

Gemäß einer Ausführungsform stellt die Dunstabzugsvorrichtung eine Dunstabzugshaube dar und die mindestens eine Filtereinheit ist vor dem Gebläse der Dunstabzugsvorrichtung angeordnet.

Bezogen auf die Dunstabzugsvorrichtung ist die erfindungsgemäße Filtereinheit vorzugsweise im Lufteinsaugbereich der Dunstabzugsvorrichtung angeordnet, um die dahinterliegenden Komponenten der Dunstabzugsvorrichtung nicht mit Kochwrasen/Aerosolen/Schmutz zu kontaminieren. Jedoch kann eine Filtereinheit optional auch im Luftausblasbereich in der Dunstabzugsvorrichtung angeordnet werden oder entlang der Luftströmungsführung zwischen dem Einlass- und Auslassbereich der Dunstabzugsvorrichtung liegen.

Die Erfindung wird im Folgenden erneut unter Bezugnahme auf die beiliegenden Figuren genauer beschrieben. Es zeigen:
Figur 1: eine schematische perspektivische Ansicht einer Ausführungsform einer erfindungsgemäßen Filtereinheit;
Figur 2: eine schematische perspektivische Schnittansicht einer weiteren Ausführungsform der Filtereinheit;
Figur 3: eine schematische Schnittansicht der Ausführungsform der Filtereinheit nach Figur 2;
Figur 4: eine schematische perspektivische Schnittansicht einer weiteren Ausführungsform der Filtereinheit;
Figur 5: eine schematische Darstellung eines Spannungsverlaufs der Spannung für die Plasmaelektrode;
Figur 6: eine schematische Darstellung eines weiteren Spannungsverlaufs der Spannung für die Plasmaelektrode; und
Figur 7: eine schematische Darstellung eines weiteren Spannungsverlaufs der Spannung für die Plasmaelektrode.

In Figur 1 ist eine Ausführungsform einer Filtereinheit 16 gemäß der vorliegenden Erfindung gezeigt. Die Filtereinheit 16 umfasst in der gezeigten Ausführungsform eine Plasmaelektrode 2 und ein Trägerelement 1. Die Plasmaelektrode 2 ist mit dem Trägerelement 1 stoffschlüssig, beispielsweise mittels einer Klebung, oder formschlüssig verbunden.

Die Plasmaelektrode 2 weist eine Gitterform auf. Die Durchlassöffnungen 12 der Plasmaelektrode 2 weisen in der dargestellten Ausführungsform eine hexagonale Form auf. Die Plasmaelektrode 2 wird in der gezeigten Ausführungsform auf einem Trägerelement 1 gehalten. In dem Trägerelement 1 sind Öffnungen 17 vorgesehen, die der Form der Durchlassöffnungen 12 entsprechen und mit den Durchlassöffnungen 12 ausgerichtet sind. In der Figur 1 ist die Gegenelektrode 3 der Plasmaelektrode 2 gezeigt. Die Gegenelektrode 3 umgibt dabei jede der Durchlassöffnungen 12.

An den beiden seitlichen Flächen der Filtereinheit 16 sind jeweils zwei Schwingungsdämpfer 4 vorgesehen. Die Schwingungsdämpfer 4 sind in der gezeigten Ausführungsform als noppenförmige Vorsprünge ausgestaltet. An der Plasmaelektrode 2 sind eine Kontaktstelle 5 für die Gegenelektrode 3 und eine Kontaktstelle 7 für die Hochspannungselektrode (in Figur 1 nicht sichtbar) vorgesehen. Diese erstrecken sich in der gezeigten Ausführungsform als Laschen über eine Seite der Plasmaelektrode 2 hinaus. Über die Kontaktstellen 5 und 7 wird die Plasmaelektrode 1 mit einem Hochspannungserzeuger 8 verbunden. Zusätzlich ist in der gezeigten Ausführungsform an dem Trägerelement 1 eine Kontaktstelle 6 vorgesehen, die sich ebenfalls in Form einer Lasche über eine Seite des Trägerelementes 1 erstreckt.

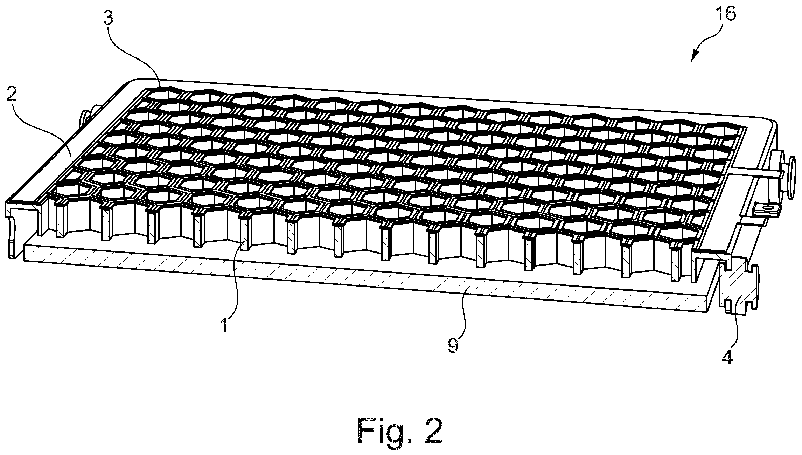

In Figur 2 ist eine weitere Ausführungsform der erfindungsgemäßen Filtereinheit 16 gezeigt. Diese unterscheidet sich von der Ausführungsform nach Figur 1 dadurch, dass zusätzlich zu der Plasmaelektrode 2 und dem Trägerelement 1 ein Mischelement 9 vorgesehen ist. In der gezeigten Ausführungsform ist das Mischelement 9 an der Stirnfläche des Trägerelementes 1 angeordnet, die der Stirnfläche abgewandt ist, an der die Plasmaelektrode 2 mit dem Trägerelement 1 verbunden ist.

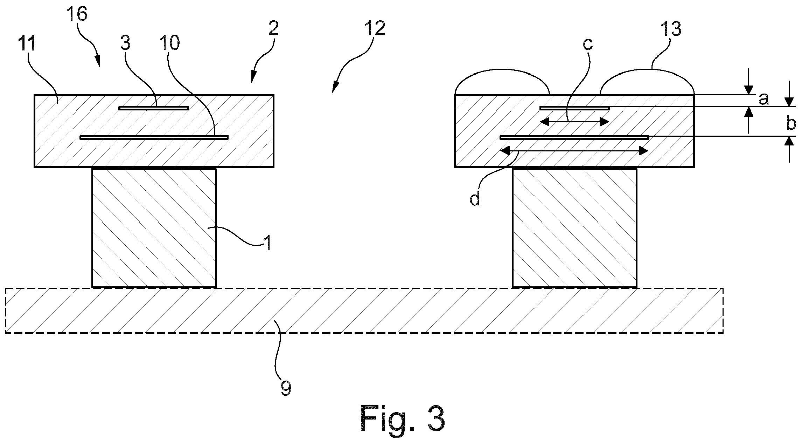

In Figur 3 ist eine schematische Schnittansicht der Ausführungsform der Filtereinheit 1 nach Figur 2 gezeigt. In dieser Ansicht ist der genauere Aufbau der Plasmaelektrode 2 zu erkennen. Die Plasmaelektrode 2 besteht aus einem Substrat 11, das als Dielektrikum dient. In dem Substrat 11 ist die Hochspannungselektrode 10, die vorzugsweise eine Gitterform aufweist, eingebettet. Zudem ist in der gezeigten Ausführungsform zu der Stirnfläche des Substrates 11 benachbart die Gegenelektrode 3 angeordnet. In der gezeigten Ausführungsform ist die Gegenelektrode 3 in dem Substrat 11 eingebettet.

Allerdings kann die Gegenelektrode 3 auch auf der Stirnfläche des Substrates 11 angeordnet sein und vorzugsweise mit einer Beschichtung überzogen sein.

In der gezeigten Ausführungsform ist die Breite c der Gegenelektrode 3 kleiner als die Breite d der darunterliegenden Hochspannungselektrode 10. In der gezeigten Ausführungsform ist der Abstand a zwischen der eingebetteten Gegenelektrode und der Stirnfläche der Plasmaelektrode 2 beispielsweise ≤ 1mm. Der Abstand b zwischen der Gegenelektrode und der Hochspannungselektrode beträgt beispielsweise ≤ 1,5mm.

Die Plasmaelektrode 2 ist auf dem Trägerelement 1 aufgebracht und vorzugsweise mit diesem verbunden. Insbesondere liegt die Plasmaelektrode 2 an der Stirnfläche, die der Stirnfläche, an oder auf der die Gegenelektrode 3 angeordnet ist, gegenüberliegt, auf dem Trägerelement 1 auf. Das Trägerelement 1 liegt an der gegenüberliegenden Stirnfläche des Trägerelementes 1 auf einem Mischelement 9 auf. Das Mischelement 9 stellt in der dargestellten Ausführungsform ein durchgehendes, luftdurchlässiges, flächiges Element dar.

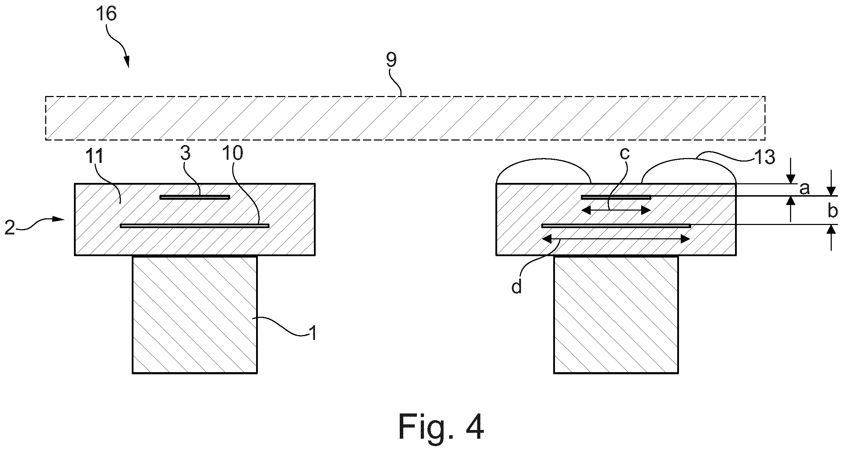

In Figur 4 ist eine weitere Ausführungsform einer Filtereinheit 16 gezeigt. Diese Ausführungsform weicht von der in Figur 3 gezeigten Ausführungsform lediglich dadurch ab, dass in der Ausführungsform nach Figur 4 das Mischelement 9 der Plasmaelektrode 2 nachgeschaltet ist, das heißt, dass das Mischelement 9 in einem Abstand zu oder auf der Stirnfläche der Plasmaelektrode 2 angeordnet ist, in der oder auf der die Gegenelektrode 3 angeordnet ist.

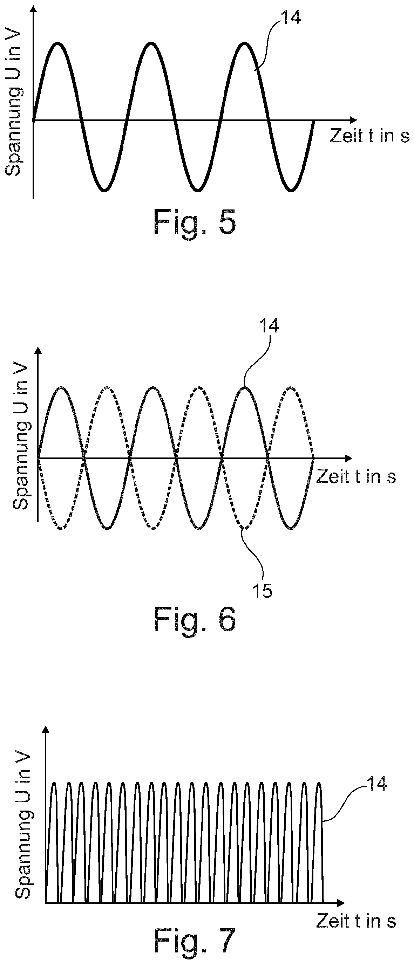

Unter Bezugnahme auf Figuren 5 bis 7 werden mögliche Betriebszustände hinsichtlich der Spannungsversorgung beschrieben.

In der Variante nach Figur 5 ist ein sinusförmiger Spannungsverlauf dargestellt. Hierbei liegt an der Hochspannungselektrode eine zeitlich sich ändernde Wechselspannung 14 mit beispielsweise Uₚₑₐₖ > 1 kV an. Vorzugsweise ist für die sinusförmig spannungsführende Elektrode, das heißt die Hochspannungselektrode, eine Spannung Uₚₑₐₖ₋ₚₑₐₖ ≤ 20 kVₚₚ zu verwenden. Idealerweise beträgt die Spannung Uₚₑₐₖ₋ₚₑₐₖ ≤ 10 kVₚₚ. Die Frequenz f der sinusförmigen Spannung beträgt vorzugsweise f ≤ 1kHz. Vorzugsweise liegt die Frequenz bei f ≤ 100Hz und im Idealfall bei 50-60 Hz. Hinsichtlich der Spannungsform sind beispielsweise dreieck-, oder rechteckförmigen Spannungsformen möglich, vorzugsweise ist jedoch sinusförmige Wechselspannung nach Figur 5 zu verwenden. Die Gegenelektrode(n) sind in dieser Variante geerdet beziehungsweise mit dem PE-Leiter (protective earth) verbunden. In diesem Fall liegt an der Gegenelektrode(n) keine elektrische Spannung U an.

In der Variante nach Figur 6 liegt sowohl an der Hochspannungselektrode eine elektrische Wechselspannung 14 als auch an der/den Gegenelektrode(n) eine elektrische Wechselspannung 15 mit Uₚₑₐₖ > 1kV an. Die Spannungsform der Hochspannungselektrode als auch der Gegenelektrode sind identisch, unterscheiden sich aber in der Phasenverschiebung ϕ zueinander, die zwischen 0 < ϕ < 2π liegt. Vorzugsweise ist eine sinusförmige Wechselspannungsform mit der Phasenverschiebung ϕ = π zu verwenden.

In Figur 7 ist schließlich eine Variante gezeigt, in der eine gepulste Spannungsformen für die Spannungsbeaufschlagung der Hochspannungselektrode schematisch gezeigt ist. Hinsichtlich der Spannungsform, die an Hochspannungselektrode anliegt, wird beispielsweise eine gepulste Spannung mit einer Periodendauer T <= 1s eingesetzt. Bei der gepulsten Spannung kann es sich um positive oder negative Spannungsart handeln.

Die vorliegende Erfindung weist eine Reihe von Vorteilen auf.

Die bevorzugte Verbindung der perforierten Plasmaelektrode, die auch als perforierter Plasmaerzeuger bezeichnet werden kann, auf dem perforierten Kunststoffträger 1 mittels einer stoffschlüssigen Verbindung, beispielsweise Klebung, garantiert, dass der spröde, bruchanfällige, Plasmaerzeuger, der vorzugsweise ein keramisches Substrat umfasst, vor statischer und dynamischer Belastung (Sprödbruch, Schwingungsbruch) geschützt ist.

Bei der Ausführungsform des Trägerelementes als perforierte Kunststoffträger ist dieser vorzugsweise mindestens aus einem antistatische beschaffenen Kunststoff-Compound mit einem Oberflächenwiderstand R ≤ 10¹¹ Ohm hergestellt. Dies garantiert, dass der Kunststoffträger keiner elektrostatischen Aufladung ausgesetzt ist und im Fehlerfall beim Durchbrennen der Hochspannungselektrode oder der Gegenelektrode(n) den elektrischen Fehlerstrom I_{F} über den perforierten Kunststoffträger elektrisch ableitet. Diese Maßnahme garantiert einen sicheren Betrieb auch im Fehlerfall beziehungsweise ein sicheres Abschalten der Filtereinheit, insbesondere der Plasmaeinheit.

Schwingungsdämpfer aus einem elastisch verformbaren Kunststoff, beispielsweise Elastomer, gewährleisten eine zusätzliche mechanische Kompensation der Filtereinheit, insbesondere der Plasmaelektrode, gegen Sprödbruch und Schwingungsbruch.

Wird die Filtereinheit "rückwärts" durchströmt (in Figur 4 von unten), das heißt, durchströmt die Luft die Filtereinheit in der Reihenfolge Trägerelement (Kunststoffträger) - Plasmaerzeuger - Mischelement, so befindet sich die perforierte Plasmaelektrode im windgeschützten Bereich (Windschatten). Die Oberfläche, das heißt Stirnfläche, der perforierten Plasmaelektrode, an der oder in der die Gegenelektrode angeordnet ist, ist in diesem Fall der direkten Luftströmung und der darin befindlichen festen und flüssigen Partikeln nicht ausgesetzt. In dieser Anordnung hinsichtlich der Strömungsrichtung schützt das Trägerelement, insbesondere der perforierte Kunststoffträger, die Plasmaelektrode vor Schmutz und sonstigen Ablagerungen. In diesem Fall ist das Mischelement vorzugsweise unmittelbar hinter der perforierten Plasmaelektrode angeordnet.

Unabhängig vom Richtungsvektor der Luftströmung durch die Filtereinheit für 0 < α < 180° und 0 < β < 180° erfolgt stets eine homogene Durchmischung der durchströmenden Luft mit den im nichtthermischen Plasma erzeugten reaktiven Sauerstoff- und Stickstoffspezies (ROS und RNS). Dies führt zu einer effizienten Geruchsneutralisation der in der Luft befindlichen VOC's.

Die perforierte Plasmaelektrode auf Basis eines Werkstoffverbundes (metallisiertes Keramiksubstrat) sorgt zudem für eine homogene Durchmischung der durchströmenden Luft mit dem Plasma, was wiederum die Filtereffizienz der Filtereinheit steigert.

Bei einer nachgeschalteten Mischblende wird eine optimale Durchmischung der im nichtthermischen Plasma erzeugten reaktiven Sauerstoffspezies (ROS) und reaktiven Spezies (RNS) mit der durchströmenden Luft und den darin befindlichen VOC's und sonstigen Kochgerüchen gewährleistet.

Durch Einbetten der Hochspannungselektroden und Gegenelektrode(n) in das Substrat, vorzugsweise Aluminiumoxid Al₂O₃, wird ein höchstmöglicher Schutz hinsichtlich elektrischer Isolation und gegen elektrochemischer Korrosion, hervorgerufen durch das nichtthermische Plasma, gewährleistet. Dadurch lässt sich die Standzeit der eingebetteten Elektroden sowie der gesamten Plasmaelektrode erhöhen.

Das keramische Substrat auf Basis von Al₂O₃ , das als Dielektrikum dient, ist temperaturbeständig und chemisch resistent gegen haushaltsübliche Säuren und Laugen. Folglich kann eine solche Plasmaelektrode mit keramischem Substrat nach Bedarf im Geschirrspüler gereinigt werden.

### Bezugszeichenliste

- 1: Trägerelement
- 2: Plasmaelektrode
- 3: Gegenelektrode
- 4: Schwingungsdämpfer
- 5: Kontaktstelle Gegenelektrode
- 6: Kontaktstelle Kunststoffträger
- 7: Kontaktstelle Hochspannungselektrode
- 8: Hochspannungserzeuger
- 9: Mischelement
- 10: Hochspannungselektrode
- 11: Substrat
- 12: Durchlassöffnung
- 13: Plasma
- 14: Spannungsverlauf der Hochspannungselektrode
- 15: Spannungsverlauf der Gegenelektrode
- 16: Filtereinheit
- 17: Öffnungen Trägerelement

## Patentansprüche

1. Filtereinheit für eine Dunstabzugsvorrichtung, wobei die Filtereinheit (16) mindestens eine Plasmaelektrode (2) umfasst, **dadurch gekennzeichnet, dass** die Filtereinheit (16) zumindest ein Trägerelement (1) aufweist, auf dem die Plasmaelektrode (2) gehalten wird, und dass das Trägerelement (1) und die Plasmaelektrode (2) luftdurchlässig sind.

2. Filtereinheit nach Anspruch 1, wobei die Plasmaelektrode (2) ein Keramiksubstrat (11) umfasst.

3. Filtereinheit nach einem der Ansprüche 1 oder 2, wobei die Plasmaelektrode (2) mit dem Trägerelement (1) form- und/oder stoffschlüssig verbunden ist.

4. Filtereinheit nach einem der Ansprüche 1 bis 3, wobei die Plasmaelektrode (2) eine Gitterform aufweist.

5. Filtereinheit nach einem der Ansprüche 1 bis 4, wobei das Trägerelement (1) eine Gitterform aufweist.

6. Filtereinheit nach einem der Ansprüche 1 bis 5, wobei das Trägerelement (1) eine Höhe aufweist, die größer ist als die Höhe der Plasmaelektrode (2).

7. Filtereinheit nach einem der Ansprüche 1 bis 6, wobei das Trägerelement (1) aus Kunststoff, insbesondere aus einem elektrisch leitfähigem Kunststoff besteht.

8. Filtereinheit nach einem der Ansprüche 1 bis 7, wobei die Filtereinheit (16) ein Mischelement (9) aufweist, das der Plasmaelektrode (2) in Strömungsrichtung nachgeschaltet ist.

9. Filtereinheit nach Anspruch 8, wobei das Mischelement (9) mindestens eine Streckmetall-Lage, eine Drahtgewebematte, ein Lochblech, einen grobporigen Sinterkunststoff und/oder einen Schaumstoff umfasst.

10. Filtereinheit nach einem der Ansprüche 1 bis 9, wobei an zumindest einem Rand der Filtereinheit ein Schwingungsdämpfer (4) aus elastischem Material vorgesehen ist.

11. Filtereinheit nach einem der Ansprüche 7 bis 10, wobei die Filtereinheit (16) mindestens eine Kontaktstelle (6) für das Trägerelement (1) aufweist.

12. Dunstabzugsvorrichtung, **dadurch gekennzeichnet, dass** diese mindestens eine Filtereinheit (16) nach einem der Ansprüche 1 bis 11 aufweist.

13. Dunstabzugsvorrichtung nach Anspruch 12, wobei die Filtereinheit (16) so in angeordnet ist, dass die Plasmaelektrode (2) senkrecht zu der Strömungsrichtung liegt.

14. Dunstabzugsvorrichtung nach einem der Ansprüche 12 bis 13, wobei die Filtereinheit (16) so angeordnet ist, dass in Strömungsrichtung zunächst das Trägerelement (1) und anschließend die Plasmaelektrode (2) und dann das Mischelement (9) durchströmt werden.
